# EUROPÄISCHE PATENTSCHRIFT

(11) **EP 3 232 579 B1**
(45) Veröffentlichungstag und Bekanntmachung des Hinweises auf die Patenterteilung: **10.06.2020**
(21) Anmeldenummer: 17165785.1
(22) Anmeldetag: 10.04.2017
(51) Int. Cl.: H04B 3/54

(54) **SCHNITTSTELLENEINHEIT, SYSTEM UND VERFAHREN ZUM ÜBERTRAGEN VON DATEN ÜBER EINE ENERGIEVERSORGUNGSLEITUNG**
INTERFACE UNIT, SYSTEM AND METHOD FOR TRANSMITTING DATA ON A POWER LINE
UNITÉ D'INTERFACE, SYSTÈME ET PROCÉDÉ DE TRANSMISSION DE DONNÉES PAR L'INTERMÉDIAIRE D'UNE CONDUITE D'ALIMENTATION ÉLECTRIQUE

(30) Priorität: 15.04.2016 DE 102016206439
(43) Veröffentlichungstag der Anmeldung: 18.10.2017
(73) Patentinhaber: ZIEHL-ABEGG SE, 74653 Künzelsau (DE)
(72) Erfinder: Schnell, Marco, 74629 Pfedelbach-Renzen (DE)
(74) Vertreter: Patent- und Rechtsanwälte Ullrich & Naumann

(56) Entgegenhaltungen:
- EP-A1- 1 082 822
- EP-A2- 2 197 101
- DE-A1- 4 413 513

## Beschreibung

Die vorliegende Erfindung betrifft eine Schnittstelleneinheit zum Übertragen von Daten von einem Endgerät über eine Energieversorgungsleitung an eine Datensenke und zur gleichzeitigen Energieversorgung eines an die Energieversorgungsleitung angeschlossenen Verbrauchers, umfassend
eine Kommunikationsschnittstelle, die zum Empfangen eines ersten Kommunikationssignals von dem Endgerät ausgebildet ist,
einen ersten Wandler, der zum Empfangen des ersten Kommunikationssignals mit der Kommunikationsschnittstelle verbunden ist und der zum Erzeugen eines Steuersignals aus dem ersten Kommunikationssignal ausgebildet ist,
einen Energieversorgungseingang zum Eingeben einer Eingangsspannung aus einer mit dem Energieversorgungseingang verbundenen Energieversorgung,
einen Energieversorgungsausgang zum Ausgeben einer Ausgangsspannung an die Energieversorgungsleitung,

Mittel zum Erzeugen einer Gleichspannung aus der Eingangsspannung und
eine Ausgangsstufe, deren Steuereingang zum Empfangen des Steuersignals mit dem ersten Wandler verbunden ist und die aus der Gleichspannung basierend auf dem Steuersignal die Ausgangsspannung erzeugt und an den Energieversorgungsausgang ausgibt.

Zudem betrifft die vorliegende Erfindung ein System und ein Verfahren zum Übertragen von Daten von einem Endgerät über eine Energieversorgungsleitung an eine Datensenke. Die Erfindung betrifft ferner ein System zum Übertragen von Daten von einem Endgerät über eine Energieversorgungsleitung an eine Datensenke eines elektrischen Verbrauchers.

In der Praxis besteht häufig die Notwendigkeit, Daten von einem Endgerät zu einer Datensenke zu übertragen. Beispielhaft sei das Übertragen von Steuerdaten, Sollwertvorgaben, Statusinformationen, Messdaten, Parameterdaten oder Software für Aktualisierungen genannt. Derartige Anforderungen entstehen beispielsweise bei Elektromotoren, an deren Steuergerät mit einem Programmiergerät Daten übertragen werden sollen bzw. deren Steuergerät Statusinformationen zurücksendet. Zur Übertragung der Daten werden häufig dedizierte Leitungen genutzt, über die die Daten mittels geeignet kodierter Kommunikationssignale übertragen werden. Bei den beispielhaft genannten Elektromotoren ist eine 0-10 V-Vorgabe (insbesondere für Sollwertvorgaben) oder MODBUS weit verbreitet.

Nachteilig an der Nutzung dedizierter Leitungen sind die dadurch entstehenden zusätzlichen Kosten. Neben den Kosten für die Leitungen selbst ergeben sich Kosten für die Installation der Leitungen. Selbst wenn lediglich eine Buchse zum Anschluss geeigneter Kommunikationsleitungen bereitgestellt ist und damit die Installation der Leitungen entfällt, entstehen zusätzliche Kosten, vor allem dann wenn die Buchse für den Einsatz in rauen Umgebungen ausgebildet sein muss. Vor allem im Niedrigkostenbereich sind diese zusätzlichen Kosten nicht hinnehmbar, insbesondere dann wenn die Kommunikationsleitungen - beispielsweise bei Elektromotoren - lediglich für eine Parametrierung und für Firmware-Aktualisierungen benötigt werden.

Dennoch besteht - auch im Niedrigkostenbereich - der Bedarf eines Datenaustauschs. Um die Kosten auf einem Minimum zu halten, sind Elektromotoren bekannt, bei denen - vorwiegend zum Übertragen von Diagnosedaten aus dem Motor heraus - eine zusätzliche Kommunikationsleitung vorhanden ist. Einen derartigen Ansatz verfolgt die Anmelderin beispielsweise bei einem Modell eines EC (Electronically Commutated)-Motors. Dieser Motor besitzt neben den Anschlüssen für Phase und Neutralleiter noch einen Anschluss "C", über den eine Steuereinheit des Motors über einen hochimpedanten Spannungsteiler Daten nach Außen senden kann. Der Ausgang muss hochimpedant sein, da die Leitung gegebenenfalls offen betrieben wird und ein eventuell entstehender Stromfluss zur Vermeidung einer Gefährdung eines Anwenders stark begrenzt sein muss. Dieser Anschluss "C" könnte prinzipiell auch für das Senden von Daten in Richtung Motor genutzt werden.

Problematisch an dieser Art der Nutzung ist, dass eine umfangreiche Anpassung der Software und eine hardwareseitige Sende-/Empfangsumschaltung notwendig wäre. Eine mechanische Umschaltung ist nicht praktikabel und eine Umschaltung über einen Halbleiterschalter ist nicht möglich, da dieser parasitäre Kapazitäten aufweist, die die niederenergetischen Kommunikationssignale sowohl in Sende- als auch in Empfangsrichtung stark verfälschen würden. Zudem müssen die Daten wegen des hochimpedanten Spannungsteilers mit einem höheren Pegel an den Motor gesendet werden als sie dieser zurücksendet. Daher ist die Leitung "C" lediglich zum Senden von Daten aus dem Motor heraus sinnvoll nutzbar.

Es sind ferner Lösungen bekannt, bei denen die Energieversorgungsleitungen zum Übertragen von Daten genutzt werden, um die Installation zusätzlicher Leitungen zu vermeiden. Die zu übertragenden Daten werden auf die Energieversorgungsleitungen moduliert, wobei häufig Trägerfrequenzen im Bereich von mehreren 10 kHz (beispielsweise zwischen 30 kHz und 500 kHz) oder im niedrigen MHz-Bereich (beispielsweise zwischen 1 MHz und 30 MHz) verwendet werden. Es sind Einzel- und Mehrfach-Träger-Verfahren bekannt. Derartige Systeme sind beispielsweise in der EP 2 672 632 A1, WO 2008/149956 A1 oder DE 39 07 652 A1 offenbart. Nachteilig an diesen Systemen ist, dass durch die komplexe Modulation und Demodulation der Daten ein erheblicher zusätzlicher Schaltungsaufwand entsteht, was sich wiederum negativ auf die Kosten und den Platzbedarf auswirkt.

Andere Lösungen zur Kommunikation über die Energieversorgungsleitungen sind beispielsweise aus der DE 10 2009 056 910 A1, der EP 2 197 101 A2 oder der DE 44 13 513 A1 bekannt. Die Druckschriften beziehen sich jeweils auf die Anwendung bei Elektromotoren. Nachteilig bei den beiden erstgenannten Lösungen ist, dass die Endstufe des Motors zum Senden der Daten kurzzeitig abgeschaltet werden muss. Bei dem drittgenannten Dokument ist ein weiterer Betrieb lediglich mit verminderter Leistung möglich.

Der vorliegenden Erfindung liegt daher die Aufgabe zugrunde, eine Möglichkeit anzugeben, mit der eine Übertragung von Daten von einem Endgerät über eine Energieversorgungsleitung zu einer Datensenke, insbesondere einer Datensenke in oder bei einem Verbraucher, bei möglichst geringem schaltungstechnischen Aufwand und möglichst geringen Kosten erreicht werden kann. Eine entsprechende Schnittstelleneinheit, entsprechende Systeme und ein entsprechendes Verfahren sollen angegeben werden. Eine Nachrüstbarkeit für bestehende elektrische Verbraucher ist wünschenswert.

Erfindungsgemäß wird die voranstehende Aufgabe durch eine Schnittstelleneinheit gemäß Anspruch 1 gelöst. Danach ist die in Rede stehende Schnittstelleneinheit dadurch gekennzeichnet,
dass die Ausgangsstufe einen ersten Pegel oder einen zweiten Pegel als Ausgangsspannung ausgibt und dass die Ausgangsstufe die Ausgangsspannung derart zwischen dem ersten Pegel und dem zweiten Pegel ändert, dass in dem zeitlichen Verlauf der Ausgangsspannung die in dem Kommunikationssignal enthaltenen Daten kodiert sind und dass die im Mittel anliegende Ausgangsspannung einen vordefinierten Schwellwert nicht unterschreitet, so dass auch bei einer Übertragung von Daten eine Energieversorgung des Verbrauchers über die Ausgangsspannung möglich bleibt.

Ferner wird die voranstehende Aufgabe durch ein System gemäß Anspruch 11 gelöst. Dieses System zum Übertragen von Daten von einem Endgerät über eine Energieversorgungsleitung an eine Datensenke umfasst:
eine Schnittstelleneinheit nach einem der Ansprüche 1 bis 10 und
einen zweiten Wandler,
wobei der zweite Wandler auf der Seite der Datensenke mit der Energieversorgungsleitung verbunden ist, wobei der zweite Wandler dazu ausgebildet ist, aus einem von der Schnittstelleneinheit erzeugten und über die Energieversorgungsleitung übertragenen Signal mit wechselnder Amplitude ein zweites Kommunikationssignal für die Datensenke zu erzeugen.

Darüber hinaus wird die voranstehende Aufgabe durch ein System gemäß Anspruch 12 gelöst. Dieses System zum Übertragen von Daten von einem Endgerät an einen elektrischen Verbraucher verwendet ein System nach Anspruch 11, wobei die Datensenke Bestandteil des elektrischen Verbrauchers ist und die Energieversorgungsleitung neben der Datenübertragung ergänzend zur Versorgung des elektrischen Verbrauchers genutzt wird.

Ferner wird die voranstehende Aufgabe durch ein Verfahren gemäß Anspruch 15 gelöst. Danach umfasst das Verfahren zur Übertragung von Daten von einem Endgerät über eine Energieversorgungsleitung an eine Datensenke und zur gleichzeitigen Energieversorgung eines an die Energieversorgungsleitung angeschlossenen Verbrauchers die Schritte:
Empfangen eines ersten Kommunikationssignals von dem Endgerät,
Wandeln des ersten Kommunikationssignals mittels eines ersten Wandlers in ein Steuersignal,

Steuern einer Ausgangsstufe durch das Steuersignal zum Erzeugen einer Ausgangsspannung, deren Amplitude basierend auf dem Steuersignal zwischen einem ersten Pegel und einem zweiten Pegel wechselt, wobei in dem zeitlichen Verlauf der Ausgangsspannung die in dem Kommunikationssignal enthaltenen Daten kodiert sind und wobei die im Mittel anliegende Spannung einen vordefinierten Schwellwert nicht unterschreitet, so dass auch bei einer Übertragung von Daten eine Energieversorgung des Verbrauchers über die Ausgangsspannung möglich bleibt, Ausgeben der Ausgangsspannung an die Energieversorgungsleitung,

Übertragen der Ausgangsspannung an die Datensenke, wobei die Ausgangsspannung auf Seite der Datensenke ergänzend zum Versorgen eines Verbrauchers genutzt wird,

Wandeln der bei der Datensenke empfangenen Spannung mittels eines zweiten Wandlers in ein zweites Kommunikationssignal und
Eingeben des zweiten Kommunikationssignals in die Datensenke.

In erfindungsgemäßer Weise ist zunächst erkannt worden, dass ein Übertragen von Daten von einem Endgerät zu einer Datensenke bei oder in einem elektrischen Verbraucher auch dann über die Energieversorgungsleitungen erfolgen kann, wenn ein möglichst geringer schaltungstechnischer Mehraufwand verlangt wird. Hierzu wird erfindungsgemäß auf eine aufwendige Frequenzmodulation der Daten verzichtet. Vielmehr werden Mittel bereitgestellt, die zu übertragenden Daten in Pegelwechsel zu kodieren, die sich bei der Datensenke besonders einfach wieder dekodieren lassen, beispielsweise mittels eines Schwellwertschalters oder eines Komparators. Zum Erreichen dieses Zieles wird eine Schnittstelleneinheit zwischen die Energieversorgung und die Datensenke geschaltet. Die erfindungsgemäße Schnittstelleneinheit umfasst eine Kommunikationsschnittstelle, einen ersten Wandler, einen Energieversorgungseingang, einen Energieversorgungsausgang, Mittel zum Erzeugen einer Gleichspannung und eine Ausgangsstufe. Die einzelnen Komponenten sind derart miteinander verschaltet und stehen derart in Wechselwirkung zueinander, dass ein an der Kommunikationsschnittstelle anliegendes erstes Kommunikationssignal in eine Ausgangsspannung gewandelt wird, die über den Energieversorgungsausgang an die Energieversorgungsleitung ausgegeben wird und deren zeitlicher Verlauf die zu übertragenden Daten wiedergibt.

Die Kommunikationsschnittstelle ist zum Empfangen eines Kommunikationssignals ausgebildet, das von dem Endgerät ausgesendet und daher von diesem Endgerät empfangen wird, und ist auf das Endgerät angepasst. Ein über die Kommunikationsschnittstelle empfangenes erstes Kommunikationssignal wird an den ersten Wandler weitergeleitet, der aus dem ersten Kommunikationssignal ein Steuersignal für die Ausgangsstufe erzeugt. Die Ausgangstufe ist - eventuell unter Zwischenschaltung weiterer Elemente, wie beispielsweise einer Lastbegrenzung - mit dem Energieversorgungsausgang verbunden. Der Eingang der Ausgangstufe ist mit dem Ausgang der Mittel zum Erzeugen einer Gleichspannung verbunden, deren Eingang wiederum mit dem Energieversorgungseingang verbunden ist. Zwischen Energieversorgungseingang und den Mitteln zum Erzeugen einer Gleichspannung ist eventuell noch eine Schutzbeschaltung angeordnet, die beispielsweise einen Schutz gegen Überspannung und/oder Verpolung gewährleistet. Der Energieversorgungseingang ist wiederum mit einer Energieversorgung verbunden, die eine Wechsel- oder Gleichspannung ausgibt.

Beim Betrieb der Schnittstelleneinheit erzeugen die Mittel zum Erzeugen einer Gleichspannung aus der am Energieversorgungseingang anliegenden Eingangsspannung eine Gleichspannung, die an die Ausgangsstufe ausgegeben wird. Die Ausgangstufe erzeugt basierend auf dem Steuersignal die Ausgangsspannung, die an den Energieversorgungsausgang und über Energieversorgungsleitungen an eine Datensenke, insbesondere eine Datensenke in oder bei einem Verbraucher, ausgegeben wird. Dabei gibt die Ausgangsstufe einen ersten Pegel oder einen zweiten Pegel als Ausgangsspannung aus, wobei die Ausgangsspannung derart zwischen dem ersten Pegel und dem zweiten Pegel geändert wird, dass in dem zeitlichen Verlauf des Ausgangssignals die Daten kodiert sind, die über das erste Kommunikationssignal aus der Kommunikationsschnittstelle empfangen wurden. Auf diese Weise ist die Schnittstelleneinheit in der Lage, aus dem ersten Kommunikationssignal eine über die Energieversorgungsleitung übertragbare Ausgangsspannung zu erzeugen, die bei der Datensenke mit geringem schaltungstechnischen Aufwand wieder dekodiert werden kann.

Die Ausgangsspannung wird vorzugsweise derart erzeugt, dass auch bei einer Übertragung von Daten eine Energieversorgung des Verbrauchers über die Ausgangsspannung möglich bleibt. In diesem Fall darf die im Mittel an dem Verbraucher anliegende Spannung einen vordefinierten Schwellwert nicht unterschreiten, da sonst die bereitgestellte Wirkleistung nicht mehr an den Verbraucher geliefert werden kann. Dies kann durch Wahl des ersten und des zweiten Pegels erreicht werden, d.h. der erste und zweite Pegel wird jeweils ausreichend groß gewählt, dass der Schwellwert im Mittel überschritten wird. Alternativ oder zusätzlich kann darauf geachtet werden, dass die Zeiten, in denen der erste Pegel anliegt, im Verhältnis zu den Zeiten, in denen der niedrigere zweite Pegel anliegt, einen bestimmten Wert nicht unterschreitet. Da der erste Pegel größer als der zweite Pegel ist, kann dadurch die übertragbare Wirkleistung positiv beeinflusst werden.

Die erfindungsgemäße Schnittstelleneinheit kann lediglich temporär zwischen Energieversorgung und Verbraucher geschaltet sein. Auf diese Weise kann, beispielsweise bei Inbetriebnahme des Verbrauchers, eine Kommunikationsfähigkeit zu dem Verbraucher bereitgestellt werden, ohne dass die Schnittstelleneinheit dauerhaft vorgesehen sein muss. Ein Techniker, der Daten von einem Endgerät zu der Datensenke in dem Verbraucher übertragen möchte, würde dann beispielsweise eine mitgebrachte Schnittstelleneinheit einschleifen und im laufenden Betrieb des Verbrauchers die Daten übertragen. Nach Beendigung der Arbeit kann die Schnittstelleneinheit wieder entfernt und durch den Techniker wieder mitgenommen werden. Auf diese Weise kann eine Schnittstelleneinheit für mehrere Verbraucher genutzt werden. Ein Käufer eines Verbrauchers muss die Schnittstelleneinheit nicht oder zumindest nicht für jeden Verbraucher erwerben, wodurch die Kosten pro Verbraucher niedrig gehalten werden können.

Ein Endgerät kann durch die verschiedensten datenerzeugenden Geräte gebildet sein. Dabei können beispielsweise ein Personal Computer oder ein Laptop mit einer entsprechenden Kommunikationsschnittstelle und geeigneter Software zum Übertragen der Daten verwendet werden. In einer bevorzugten Ausgestaltung ist das Endgerät jedoch durch ein Programmiergerät gebildet, das zur Programmierung des Verbrauchers ausgebildet ist. Unter Programmierung wird dabei jegliche Art von Datenübertragung an die Datensenke mit dem Zweck, Daten bei der Datensenke zu speichern oder eine Manipulation von Daten bei der Datensenke vorzunehmen. Ein derartiger Programmiervorgang kann beispielsweise das Übertragen von Parametern oder Parametersätzen, das Einspielen einer Software, das Übertragen und Abspeichern von Sollwerten oder dergleichen umfassen.

Die Energieversorgung kann auf verschiedenste Weise gebildet sein. Gleichspannungsquellen sind ebenso nutzbar wie Wechselspannungsquellen. Beispielhaft sei auf ein Energieversorgungsnetzwerk, Fotovoltaik- oder Windkraftanlagen verwiesen. Eine Wechselspannung kann dabei ein- oder mehrphasig sein. Wenn eine Gleichspannung in den Energieversorgungseingang eingegeben wird, werden die Mittel zum Erzeugen einer Gleichspannung die Eingangsspannung im Allgemeinen allenfalls unwesentlich verändern, beispielsweise durch eine zusätzliche Glättung der Gleichspannung und/oder eine Reduzierung der Eingangsspannung um den Spannungsabfall über Gleichrichterdioden. Ein derartiges Verhalten ergibt sich, wenn die Mittel zum Erzeugen einer Gleichspannung entsprechend einer bevorzugten Ausgestaltung durch einen Gleichrichter, insbesondere einen Brückengleichrichter, und einen oder mehrere Glättungskondensator/en gebildet ist. Prinzipiell denkbar wären aber auch Mittel zum Erzeugen einer Gleichspannung, die einen Wechsel des Spannungsniveaus, beispielsweise eine Spannungserhöhung, durchführen. Wenn die Schnittstelleneinheit lediglich für die Eingabe von Gleichspannung gedacht ist, können die Mittel zum Erzeugen von Gleichspannung prinzipiell auch entfallen. Wesentlich ist lediglich, dass die Gleichspannung am Eingang der Ausgangsstufe ausreichend stabil ist, damit sich ein Wechsel zwischen dem ersten und dem zweiten Pegel ausreichend gegenüber einer Restwelligkeit absetzt und damit nach Übertragen der Ausgangspannungen über die Energieversorgungsleitungen zu der Datensenke noch ausreichend detektierbare Pegelwechsel vorhanden sind. Dies lässt sich in der Praxis jedoch relativ einfach verwirklichen.

Die erfindungsgemäße Lehre kann prinzipiell auf den verschiedensten Spannungsniveaus angewendet werden. Vorzugsweise kommt jedoch Niederspannung mit einem Spannungsniveau bis 1000V, besonders bevorzugter Weise zwischen 100V und 400V zum Einsatz. Beispielhaft sei auf eine einphasige Wechselspannung mit einem Effektivwert von 120V oder 230V, eine dreiphasige Wechselspannung mit Außenleiterspannungen von 210V oder 400V oder eine Gleichspannung von 325V verwiesen.

Prinzipiell kann die hier beschriebene Lehre mit den verschiedensten Datensenken verwendet werden. Bevorzugter Weise steht die Datensenke jedoch im Zusammenhang mit einem Verbraucher. Dabei ist die Datensenke bei oder in dem Verbraucher angeordnet. "Bei dem Verbraucher" bedeutet, dass die Datensenke in unmittelbarer Nähe zu dem Verbraucher angeordnet ist. Wenn der Verbraucher beispielsweise durch einen Elektromotor gebildet ist, dessen Steuergerät außerhalb des Motors angeordnet und über ein Kabel mit dem Motor verbunden ist, und wenn dieses Steuergerät die Datensenke bildet, so wäre die Datensenke bei dem Verbraucher angeordnet. Wenn - in Fortführung dieses Beispiels - das Steuergerät in dem Gehäuse des Elektromotors oder in einem Teilabschnitt des Gehäuses des Elektromotors angeordnet ist, so wäre die durch das Steuergerät gebildete Datensenke in dem Verbraucher angeordnet.

Es sei darauf hingewiesen, dass ein besonders bevorzugter Verbraucher zwar durch einen Elektromotor, insbesondere einen EC (Electronically Commuted)-Motor, gebildet ist. Allerdings ist die hier beschriebene Lehre nicht zwangsläufig auf einen Elektromotor beschränkt. Die erfindungsgemäße Schnittstelleneinheit kann prinzipiell mit den verschiedensten Verbrauchern mit Datensenke genutzt werden. Wesentlich ist, dass der Verbraucher für den Betrieb mit der durch die Schnittstelleneinheit ausgegebenen Spannung geeignet ist und für die Auswertung der Eingangsspannung und das Dekodieren der damit übertragenen Daten erweiterbar ist. Dies ist beispielsweise bei Verbrauchern gegeben, die einen Gleichspannungs- oder Gleichstromzwischenkreis aufweisen, wie bei Umrichtern oder umrichterähnlichen Applikationen.

Die Ausgangstufe kann prinzipiell durch verschiedenste Schaltungen und Komponenten gebildet sein, die zum Erzeugen von Wechseln zwischen einem ersten und einem zweiten Pegel in der Lage sind. Um die Auswertung der Pegelwechsel bei der Datensenke zu erleichtern, sollten die Flanken ausreichend steil sein, d.h. ein Pegelwechsel sollte in weniger als 1 ms, vorzugsweise in weniger als 500 µs, besonders bevorzugter Weise in weniger als 100 µs erfolgen.

In einer bevorzugten Ausgestaltung umfasst die Ausgangsstufe einen Schalter, der einen Steuereingang umfasst und basierend auf einem an dem Steuereingang anliegenden Steuersignal in mindestens zwei verschiedene Schalterzustände gebracht werden kann. Diese Schalterzustände sind beispielsweise "offen" und "geschlossen". Dabei bewirkt der Schalter in der Ausgangsstufe, dass durch die Ausgangsstufe in einem ersten Schalterzustand der erste Pegel und in einem zweiten Schalterzustand der zweite Pegel ausgegeben wird. Der Schalter kann prinzipiell auf verschiedenste Arten gebildet sein, solange ein Steuersignal in der Lage ist, einen Schalterzustandswechsel herbeizuführen. Vorzugsweise wird jedoch ein elektronischer Schalter verwendet, der ganz besonders bevorzugte Weise durch einen Transistor gebildet ist. Diese kann beispielsweise durch einen Feldeffekttransistor gebildet sein, an dessen Gate-Anschluss das Steuersignal anliegt. Die Ausgangsstufe kann auch mehrere Schalter umfassen.

Es gibt verschiedene Möglichkeiten, wie der/die Schalter in der Ausgangsstufe verschaltet sein können. In der einfachsten Ausführungsform ist der Schalter in die Leitung für die positive Spannung eingeschleift. Der Schalter würde dann die Spannung, die von den Mitteln zum Erzeugen einer Gleichspannung erzeugt und an die Ausgangsstufe ausgegeben wird, an den Ausgang ausgeben oder die Leitung unterbrechen. Entsprechend könnte der Schalter auch in die Leitung für die negative Spannung eingeschleift sein. Beide Ausgestaltungen lassen sich auf kombinieren, d.h. ein erster Schalter ist in die Leitung für die positive Spannung eingeschleift sein, ein zweiter Schalter in die Leitung für die negative Spannung. Damit könnten beide Leitungen getrennt bzw. verbunden werden. Zum Erzielen klarer definierter Pegel bei der Ausgangsspannung könnten auch zwei Schalter verwendet werden, die mit komplementären Steuersignalen angesteuert werden. Dabei wären die beiden Schalter in Reihe zueinander zwischen der Leitung der positiven und der Leitung der negativen Spannung geschaltet, wobei der Ausgang der Ausgangsstufe durch den Verbindungspunkt zwischen den beiden Schaltern gebildet ist. In einem ersten Zustand wäre der erste Schalter zu der positiven Spannung geschlossen und der zweite Schalter zu der negativen Spannung geöffnet. Als Ausgangsspannung liegt damit die positive Spannung an. In einem zweiten Zustand wäre der erste Schalter geöffnet und der zweite Schalter geschlossen. Als Ausgangsspannung liegt damit die negative Spannung an, wodurch zwischen den Energieversorgungsleitungen eine Spannung von 0 V anliegt.

Es sei darauf hingewiesen, dass in den voranstehenden Ausführungen die Begriffe "positive Spannung" und "negative Spannung" beispielhaft und nicht beschränkend verwendet ist. Dies bedeutet lediglich, dass die "positive Spannung" größer als die "negative Spannung" ist. Dies bedeutet nicht zwangsläufig, dass an der Leitung für die positive Spannung stets eine Spannung größer 0 V und an der Leitung für die negative Spannung stets eine Spannung kleiner 0 V anliegen muss. Die "negative Spannung" kann beispielsweise auch auf Massepotential liegen, während die "positive Spannung" eine Spannung größer 0 V ist. Ebenso kann die "positive Spannung" auf Massepotential liegen, während die "negative Spannung" eine Spannung kleiner 0 V ist.

In einer zweiten Ausgestaltung der Ausgangsstufe umfasst diese einen oder mehrere steuerbare Widerstände. Ein steuerbarer Widerstand ist eine elektronische Komponente, deren Widerstandswert durch ein an einem Steuereingang anliegendes Steuersignal zwischen einem ersten und einem zweiten Zustand verändert werden kann. Der steuerbare Widerstand/die steuerbaren Widerstände wirken dabei in der Ausgangsstufe derart, dass durch die Ausgangstufe bei dem ersten Zustand der erste Pegel und bei dem zweiten Zustand der zweite Pegel ausgegeben wird. In einer einfachen Ausgestaltung wäre die Ausgangsstufe beispielsweise durch einen gegen Masse geschalteten steuerbaren Widerstand gebildet, dessen erster Zustand ein hochohmiger Zustand und dessen zweiter Zustand ein niederohmiger Zustand ist. Im ersten Zustand würde dann die an der Ausgansstufe anliegende Gleichspannung nahezu unverändert als Ausgangsspannung ausgegeben, während in dem zweiten Zustand die Gleichspannung reduziert wird. Der steuerbare Widerstand kann dabei wiederum auf verschiedenste Weisen gebildet sein. Vorzugsweise ist der steuerbare Widerstand ebenso durch einen Transistor, wie ein Feldeffekttransistor, gebildet.

Die Ausgangsstufe ist derart ausgebildet, dass der erste und der zweite Pegel detektierbar unterschiedlich sind. Dabei sei der zweite Pegel niedriger als der erste Pegel. "Detektierbar" bedeutet, dass sich ein Pegelwechsel ausreichend von Störgrößen, wie beispielsweise der Restwelligkeit oder den Rückwirkungen aus dem Verbraucher, abhebt. Wenn beispielsweise die Störgrößen eine Spannungsänderung von bis zu 15% des durchschnittlichen Gleichspannungsniveaus ausmachen würden, so kann von einer Unterscheidbarkeit ausgegangen werden, wenn der Unterschied zwischen dem ersten und dem zweiten Pegel mindestens 25% des durchschnittlichen Gleichspannungsniveaus umfasst. Zur Vereinfachung der Schaltung der Ausgangsstufe ist der erste Pegel in einer bevorzugten Ausgestaltung im Wesentlichen gleich der Gleichspannung, die durch die Mittel zum Erzeugen einer Gleichspannung aus der Eingangsspannung erzeugt wird. Wenn beispielsweise am Energieversorgungseingang eine Wechselspannung mit einem Effektivwert von 230V anliegt, würde sich eine Gleichspannung von ca. 325V einstellen. Der erste Pegel würde dann 325V betragen. Ein detektierbar niedrigerer zweiter Pegel würde beispielsweise bei 300V oder darunter liegen. Vorzugsweise ist der zweite Pegel jedoch gleich einer Spannung von 0V.

Auch der erste Wandler kann prinzipiell auf verschiedenste Weise ausgebildet sein. Die Ausgestaltung hängt im Wesentlichen von dem Kommunikationssignal ab, das von dem Endgerät empfangen wird. Je einfacher sich aus dem Kommunikationssignal ein Steuersignal für die Ausgangsstufe bilden lässt, desto einfacher kann der erste Wandler ausgestaltet sein. Wenn das Endgerät Ethernet-Datenpakete als ein Kommunikationssignal aussendet, wird der erste Wandler recht komplex sein. Wenn das Kommunikationssignal durch ein Rechtecksignal gebildet ist, beispielsweise durch ein RS232-Signal, kann dieses Kommunikationssignal ohne großen Aufwand in ein Steuersignal gewandelt werden. Der erste Wandler könnte dann beispielsweise durch einen einfachen Spannungsteiler gebildet sein, der den High-Pegel des RS232-Signals in eine Spannung U_{Logic} und den Low-Pegel des RS232-Signals in eine Spannung von 0V wandelt. In besonders einfachen Fällen kann sich der erste Wandler auf eine Schutzbeschaltung beschränken oder in seltenen Fällen sogar komplett entfallen. Wesentlich ist, dass am Ausgang des ersten Wandlers ein reines Sendesignal (Tx-Signal) für die Datensenke vorliegt. Selbst wenn die Kommunikation mit dem Endgerät also Rx- und Tx-Komponenten (also Signale von dem Endgerät weg und zu dem Endgerät hin) enthält, so muss der erste Wandler die Tx-Komponente extrahieren und diese in ein Steuersignal wandeln.

In einer besonders bevorzugten Ausgestaltung ist der erste Wandler derart ausgebildet, dass er als Teilnehmer eines Kommunikationsbusses verwendet werden kann. Eine bevorzugte Ausgestaltung eines derartigen Busses ist der MODBUS. Der erste Wandler würde hierbei (eventuell in Verbindung mit der Kommunikationsschnittstelle) die Kommunikation mit dem Bus übernehmen. Ein von dem Bus empfangenes Kommunikationssignal würde dann ausgewertet und in ein geeignetes Steuersignal umgewandelt. In besonders einfacher Weise kann der erste Wandler durch einen MODBUS-RS232-Wandler gebildet sein. Derartige Bausteine sind kostengünstig verfügbar, so dass das Bereitstellen eines Steuersignals kostengünstig realisiert werden kann.

Vorzugsweise ist der erste Wandler dazu ausgebildet, aus dem Kommunikationssignal ein Rechtecksignal, vorzugsweise ein unipolares Rechtecksignal, als Steuersignal zu erzeugen. Unipolares Rechtecksignal bedeutet, dass das Rechtecksignal zwischen einem ersten Wert und einem zweiten Wert sprungartig wechselt, wobei beide Werte entweder ≥ 0V oder ≤ 0V sind. Vorzugsweise ist dabei ein Spannungswert U_{Logic} > 0V, beispielsweise 5V oder 3,3V, während der zweite Wert = 0V ist.

Ein erfindungsgemäßes System zum Übertragen von Daten von einem Endgerät über eine Energieversorgungsleitung an eine Datensenke umfasst eine erfindungsgemäße Schnittstelleneinheit und einen zweiten Wandler. Dieses System bildet quasi das "Herzstück" der erfindungsgemäßen Datenübertragung. Der zweite Wandler ist dabei auf der Seite der Datensenke angeordnet und mit der Energieversorgungsleitung verbunden. Dies bedeutet, dass auf der einen Seite der Energieversorgungsleitung die Schnittstelleneinheit mit der Energieversorgungsleitung verbunden ist und dass auf der anderen (entfernten) Seite der Energieversorgungsleitung der zweite Wandler angeordnet ist. Der zweite Wandler ist dabei dazu ausgebildet, aus einer von der Schnittstelleneinheit erzeugten und über die Energieversorgungsleitung übertragenen Spannung mit wechselnder Amplitude ein zweites Kommunikationssignal für die Datensenke zu erzeugen. Hierzu muss der zweite Wandler (eventuell in Zusammenarbeit mit der Datensenke selbst) dazu ausgebildet sein, auf der Eingangsspannung kodierte Daten für die Datensenke zu erkennen. Durch die erfindungsgemäße Art der Kodierung der Daten kann der zweite Wandler im einfachsten Fall durch einen Pegelwandler, einen Schwellwertschalter und/oder einen Komparator gebildet sein. Denkbar wäre beispielsweise, dass ein Spannungsteiler einen Pegelwandler bildet, dessen Mittelabgriff mit einem Komparator (in Hardware oder Software implementiert) verbunden ist. Der Ausgang des zweiten Wandlers ist dabei kommunizierend mit der Datensenke verbunden, so dass Daten, die in der Eingangsspannung für die Datensenke erkannt und extrahiert werden, an die Datensenke gesendet werden können.

Dieses "Herzstück" der Datenübertragung kann besonders gut in einem erfindungsgemäßen System zum Übertragen von Daten von einem Endgerät über eine Energieversorgungsleitung an einen elektrischen Verbraucher genutzt werden. Bei diesem System ist die Datensenke Bestandteil des elektrischen Verbrauchers. Der Begriff "Bestandteil" soll sich dabei nicht ausschließlich auf eine vollständige Integration der Datensenke in dem Verbraucher beschränken, wie es beispielsweise bei einem abgeschlossenen Gehäuse des Verbrauchers, in dem die Datensenke von außen nicht erkennbar angeordnet ist, der Fall wäre. Sehr häufig sind geeignete Datensenken in Teilgehäusen angeordnet, die an dem Gehäuse des Verbrauchers befestigt sind. Auch diese Ausgestaltung soll im Sinne des Begriffs "Bestandteil" des Verbrauchers verstanden werden.

Vorzugsweise ist die Datensenke durch eine Steuereinheit des Verbrauchers gebildet. So weist beispielsweise ein EC-Motor oder ein Wechselrichter eine Steuereinheit auf, die pulsweitenmodulierte Signale an die Leistungsstufe des Wechselrichters ausgibt. Sehr häufig sind in dieser Steuereinheit auch entsprechende Parameter für die Ansteuerung der Leistungsstufe enthalten. In den meisten Fällen basiert eine derartige Steuereinheit auf einem Mikroprozessor, der als dedizierte Komponente oder als Bestandteil einer programmierbaren Logik (beispielsweise einem FPGA (Field Programmable Gate Array) vorliegt.

In vielen Fällen besitzen diese Steuereinheiten eine Eingangsspannungsüberwachung, die den Pegel der Eingangsspannung in den Verbraucher überwacht. Damit wird bei einer Wechselspannung als Eingangsspannung gewährleistet, dass die Leistungsstufe optimal angesteuert werden kann. Diese Eingangsspannungsüberwachung besteht meist aus einem hochohmigen Spannungsteiler, dessen Mittelabgriff (eventuell mit zusätzlicher Schutzbeschaltung) in die Steuereinheit geführt wird. Bei einer Ausgestaltung des zweiten Wandlers wird diese Eingangsspannungsüberwachung für das erfindungsgemäße System genutzt. Der Spannungsteiler kann den zweiten Wandler bilden. Das Erkennen einer Spannungsabsenkung und damit das Erkennen von übertragenen Daten würde durch die Eingangsspannungsüberwachung erkannt. Mit dieser zusätzlichen Nutzung der Eingangsspannungsüberwachung muss bei der Steuereinheit keine Schaltungsanpassung erfolgen. Es genügt vielmehr, dass die Steuereinheit bzw. die Eingangssteuerüberwachung eine Zusatzfunktion erhält. Dies kann über eine einfache Software-Aktualisierung erfolgen.

Die vorliegende Erfindung beschäftigt sich maßgeblich mit einem Übertragungsweg von einem Endgerät in Richtung Datensenke. Damit ist die Schnittstelleneinheit bzw. das System für eine unidirektionale Kommunikation geeignet. Sofern eine bidirektionale Kommunikation gewünscht ist, wird der Weg von der Datensenke zu dem Endgerät vorzugsweise über die bereits angesprochene Leitung "C" bereitgestellt werden. Für die vorliegende Erfindung ist das Vorhandensein oder die Ausgestaltung dieses Kommunikationswegs jedoch unerheblich.

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 11 und 12 jeweils nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: ein Blockdiagramm eines ersten Ausführungsbeispiels eines erfindungsgemäßen Systems zum Übertragen von Daten von einem Endgerät über eine Energieversorgungsleitung zu einer Datensenke in einem Verbraucher,
- Fig. 2: Diagramme mit Spannungsverläufen an verschiedenen Punkten des Systems nach Fig. 1,
- Fig. 3: ein Schaltbild mit einem Ausführungsbeispiel eines zweiten Wandlers.

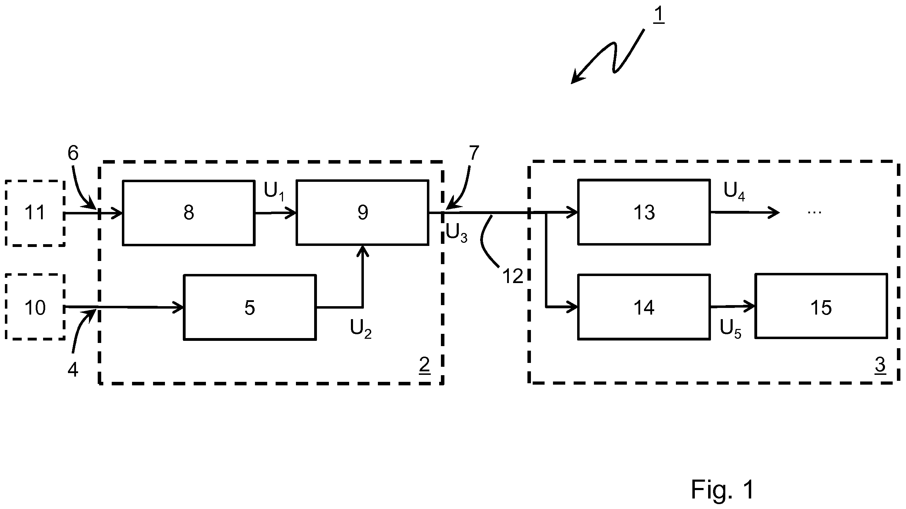

Fig. 1 zeigt ein Blockdiagramm eines ersten Ausführungsbeispiels eines erfindungsgemäßen Systems. Das System ist dazu geeignet, Daten von einem Endgerät über eine Energieversorgungsleitung zu einem Verbraucher zu übertragen. Die Daten werden dort von einer Datensenke empfangen und verarbeitet. Das System 1 umfasst eine Schnittstelleneinheit 2 und einen Verbraucher 3. Die Schnittstelleneinheit 2 umfasst eine Kommunikationsschnittstelle 4, einen ersten Wandler 5, einen Energieversorgungseingang 6, einen Energieversorgungsausgang 7, Mittel zum Erzeugen einer Gleichspannung 8 und eine Ausgangsstufe 9. Die Kommunikationsschnittstelle 4 ist mit einem Endgerät 10 verbunden, das nicht als Bestandteil des Systems angesehen wird und daher gestrichelt eingezeichnet ist. Ein von dem Endgerät 10 erzeugtes erstes Kommunikationssignal wird über die Kommunikationsschnittstelle 4 in die Schnittstelleneinheit 2 eingegeben. Dort wird das erste Kommunikationssignal von dem ersten Wandler 5 empfangen, der aus dem ersten Kommunikationssignal ein Steuersignal erzeugt. Das Steuersignal wird an einen Steuereingang der Ausgangsstufe 9 ausgegeben und dient zur Steuerung der Ausgangsstufe.

Der Energieversorgungseingang 6 ist mit einer Energieversorgung 11 verbunden, die eine Gleich- oder Wechselspannung als Eingangsspannung für die Schnittstelleneinheit 2 ausgibt. Die über den Energieversorgungseingang 6 eingegebene Eingangsspannung wird den Mitteln zum Erzeugen einer Gleichspannung 8 zugeführt, die aus der Eingangsspannung eine Gleichspannung erzeugt. Die Mittel zum Erzeugen einer Gleichspannung 8 sind vorzugsweise durch einen Brückengleichrichter mit nachgeschaltetem Glättungskondensator gebildet. Demnach entsteht bei Eingabe einer Wechselspannung als Eingangsspannung eine Gleichspannung 8, die eine Restwelligkeit aufweist. Sofern eine Gleichspannung 8 an dem Energieversorgungseingang 6 anliegt, wird diese durch den Brückengleichrichter nahezu unverändert belassen, wobei lediglich die Spannungsabfälle über die Dioden zu einer geringfügigen Reduzierung der Spannung führen werden. Der Glättungskondensator dürfte dann eine eventuell vorhandene Restwelligkeiten glätten und Störungssignale filtern.

Die durch die Mittel zum Erzeugen einer Gleichspannung 8 erzeugte Gleichspannung wird in die Ausgangsstufe 9 eingegeben, die basierend auf dem von dem ersten Wandler 5 empfangenen Steuersignal eine Ausgangsspannung erzeugt und diese an den Energieversorgungsausgang 7 ausgibt. Der Energieversorgungsausgang 7 ist mit einer Energieversorgungsleitung 12 verbunden, die zur Energieversorgung des Verbrauchers 3 sowie zur Übertragung der über die Kommunikationsschnittstelle 4 von dem Endgerät 10 empfangenen Daten dient.

An der dem Energieversorgungsausgang 7 abgewandten Seiten der Energieversorgungsleitung 12 ist der Verbraucher 3 angeschlossen. Die in den Verbraucher 3 eingegebene Spannung wird einem Leistungsteil 13 zugeführt, das je nach Art des Verbrauchers eine unterschiedliche Funktion erfüllen kann. So wäre denkbar, dass die eingegebene Spannung auf ein anderes Spannungsniveau gebraucht wird, beispielsweise eine Kleinspannung. In dem bevorzugten Ausführungsbeispiel, bei dem der Verbraucher 3 durch einen Motor gebildet ist, würde das Leistungsteil 13 durch einen Gleichrichter inklusive Glättungskondensator (zum Erzeugen einer Zwischenkreisgleichspannung) und einen nachgeschalteten Wechselrichter gebildet, der eine Wechselspannung für den Motor bereitstellt.

Die in den Verbraucher 3 eingegebene Spannung wird ferner einem zweiten Wandler 14 zugeführt, der die in den Verbraucher 3 eingegebene Spannung (eventuell in Zusammenarbeit mit einer weiteren Komponente) hinsichtlich des Vorhandenseins von kodierten Daten überwacht. Für das Vorliegen von übertragenen Daten kann entschieden werden, wenn der Pegel der Eingangsspannung sich über ein Mindestmaß ändert, beispielsweise um mindestens 25% der maximalen Spannung. Ferner kann ausgewertet werden, wie schnell und wie oft sich der Pegel ändert. Wenn beispielsweise lediglich einmal ein Wechsel von einem ersten Pegel zu einem zweiten Pegel und zurück erfolgt, liegt eher ein kurzfristiger Spannungseinbruch vor als ein Kommunikationssignal.

Wenn für das Vorhandensein von kodierten Daten entschieden wird, erzeugt der zweite Wandler aus den Daten ein zweites Kommunikationssignal, das an dessen Ausgang ausgegeben und eine mit diesem Ausgang verbundene Datensenke 15 zugeführt wird. Die Datensenke 15 wertet die empfangenen Daten aus und führt eventuell darin enthaltene Software-Befehle aus. Wenn die von dem Endgerät 10 erzeugten Daten beispielsweise einen Parameter oder einen Parametersatz umfassen, würde die Datensenke veranlassen, dass der Parameter bzw. Parametersatz aktualisiert wird. Bei dem Ausführungsbeispiel des Verbrauchers 3 durch einen EC-Motor wäre die Datensenke 15 beispielsweise eine Steuereinheit, die das Leistungsteil 13 ansteuert. Das Erkennen von übertragenen Daten kann durch eine Eingangsspannungsüberwachung der Steuereinheit durchgeführt werden, so dass der zweite Wandler mit Bestandteilen der Steuereinheit zusammenarbeiten würde.

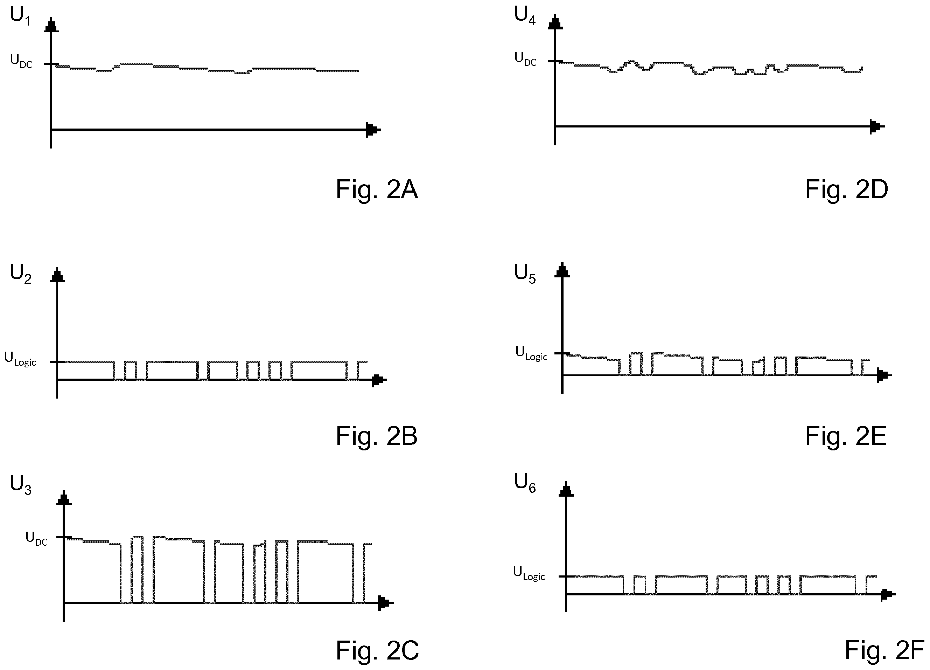

In den Teilfiguren der Fig. 2 sind verschiedene Spannungsverläufe in dem System gemäß Fig. 1 dargestellt. Die in Fig. 2A dargestellte Spannung U₁ liegt zwischen den Mitteln zum Erzeugen einer Gleichspannung 8 und der Ausgangsstufe 9 an. Die Spannung U₁ weist eine deutlich erkennbare Restwelligkeit auf, so dass das Vorliegen einer Wechselspannung als Eingangsspannung für die Schnittstelleneinheit 2 geschlossen werden kann. Die Spannung nimmt einen maximalen Wert von U_{DC} an. Unter der Annahme, dass die Eingangsspannung an dem Energieversorgungseingang 6 einen Effektivwert von 230V aufweist und einphasig ist, läge U_{DC} beispielsweise bei ca. 325V.

Die in Fig. 2B dargestellte Spannung U₂ stellt einen zeitlichen Verlauf des durch den ersten Wandler 5 erzeugten Steuersignals dar. Das Steuersignal ist ein unipolares Rechtecksignal, das zwischen einem positiven Spannungswert U_{Logic} und 0V wechselt.

Fig. 2C zeigt den Verlauf einer Spannung U₃, die basierend auf dem Steuersignal (Spannung U₂) aus der Gleichspannung U₁ erzeugt wird. Die Spannung U₃ wechselt zwischen dem Spannungswert der Gleichspannung U₂ - erster Pegel - und 0V - zweiter Pegel. Der Pegelwechsel ist dabei annähernd synchron zum Steuersignal U₂. Die Restwelligkeit der Gleichspannung U₁ ist noch in der Ausgangsspannung U₃ zu erkennen. Da der Pegelwechsel aber deutlich größer ist als die Restwelligkeit, kann bei dem zweiten Wandler 14 problemlos für das Vorhandensein von kodierten Daten entschieden und daraus ein zweites Kommunikationssignal erzeugt werden.

Es ist zu erkennen, dass sowohl das Steuersignal U₂ als auch die Ausgangsspannung U₃ einen relativ großen Anteil von High-Pegel aufweist und lediglich kurzzeitig auf Low gezogen wird. Dies begünstigt zum einen eine relativ geringe Belastung der Ausgangsstufe, wenn die Ausgangsspannung auf den zweiten Pegel gebracht wird. Zum anderen ist die Leistung, die im Mittel über die Energieversorgungsleitung 12 übertragbar ist, weiterhin hoch, so dass beim Verbraucher keine signifikante Verminderung der Leistung durch eine Datenübertragung zu verzeichnen ist.

Die Spannung U₃ wird über die Energieversorgungsleitung 12 an den Verbraucher 3 übertragen und durch das Leistungsteil 13 weiter bearbeitet. In dem Beispiel eines EC-Motors als Verbraucher 3 würde das Leistungsteil 13 durch ein Gleichrichter zum Erzeugen einer Zwischenkreisgleichspannung, einem Glättungskondensator und einem Wechselrichter gebildet. Die an einem Ausgang dieses Gleichrichters über dem Glättungskondensator anliegende Spannung U₄ ist in Fig. 2D dargestellt. Es ist deutlich zu erkennen, dass durch die Kodierung der Daten in der Spannung auf der Energieversorgungsleitung eine Welligkeit auf der Spannung U₄ und damit im Gleichspannungszwischenkreis des EC-Motors entsteht. Dennoch ist die Spannung ausreichend stabil, um den Motor zu betreiben.

In Fig. 2E ist eine Spannung U₅ dargestellt, wie sie am Ausgang des zweiten Wandler 14 anliegt, wenn der zweite Wandler 14 durch einen Spannungsteiler gebildet ist. Die Restwelligkeit aus der Gleichrichtung der Wechselspannung ist nach wie vor vorhanden. In Fig. 2F ist die Spannung binarisiert, d.h. die Spannung nimmt entweder eine Spannung U_{Logic} oder 0V an, und entspricht damit im Wesentlichen dem Steuersignal U₂. Eine derartige Binarisierung kann beispielsweise durch einen Komparator erreicht werden. Die in Fig. 2F dargestellt Spannung U6 entspricht einem Signal, das in der Datensenke 15 erzeugt wird.

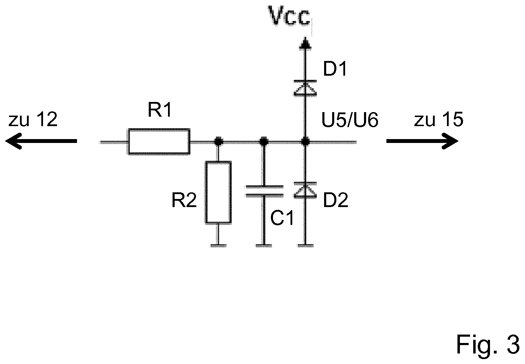

Fig. 3 zeigt eine beispielhafte Schaltung, die den zweiten Wandler implementieren könnte. Die Schaltung umfasst einen Spannungsteiler aus Widerstand R1 und R2, an dessen Mittelabgriff ein Kondensator C1 gegen Masse verbunden ist. Ferner sind zwei in Sperrrichtung geschaltete Dioden D1 und D2 vorhanden. Die Kathode der Diode D1 ist mit einer Spannungsversorgung V_{cc} verbunden, die gleichzeitig die Spannungsversorgung für den Mikrocontroller der Steuereinheit bildet. Die Anode der Diode D2 ist mit Masse verbunden. Die Anode der Diode D1 ist mit der Kathode der Diode D2, dem Mittelabgriff des Spannungsteilers und dem der Masse abgewandten Anschluss des Kondensators C1 verbunden.

Aus der in Fig. 3 dargestellten Schaltung ist zu erkennen, dass eine binarisierte Spannung auch durch diese Schaltung erzeugt werden kann, wenn die Spannung an dem Verbindungspunkt zwischen den Widerständen R1 und R2 eine gewisse Spannung überschreitet. Hierzu muss der High-Pegel der Spannung an dem Verbindungspunkt größer sein als die Spannung V_{cc} plus der Durchlassspannung V_{f,D1} der Diode D1. Damit kann durch geeignete Dimensionierung der Spannung V_{cc} sowie der Widerstände R1 und R2 eine Spannung U₆ entsprechend Fig. 2F am Ausgang des zweiten Wandlers gemäß Fig. 3 erzeugt werden. Liegt der High-Pegel der Spannung an dem Verbindungspunkt zwischen den Widerständen R1 und R2 unterhalb von V_{cc} plus der Durchlassspannung V_{f,D1} der Diode D1, so liegt am Ausgang des zweiten Wandlers eine Spannung U₅ entsprechend Fig. 2E an. Mit jedem Überschreiten der Schwelle wird die Ausgangsspannung begrenzt. Da die Ausgangsspannung von der Dimensionierung der Schaltung abhängig ist, ist in Fig. 3 sowohl die Spannung U₅ als auch die Spannung U₆ eingetragen.

Hinsichtlich weiterer vorteilhafter Ausgestaltungen der erfindungsgemäßen Schnittstelleneinheit, der erfindungsgemäßen Systeme und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: System
- 2: Schnittstelleneinheit
- 3: Verbraucher
- 4: Kommunikationsschnittstelle
- 5: Erster Wandler
- 6: Energieversorgungseingang
- 7: Energieversorgungsausgang
- 8: Gleichrichter
- 9: Ausgangsstufe
- 10: Endgerät
- 11: Energieversorgung
- 12: Energieversorgungsleitung
- 13: Leistungsteil
- 14: Zweiter Wandler
- 15: Datensenke

## Patentansprüche

1. Schnittstelleneinheit zum Übertragen von Daten von einem Endgerät (10) über eine Energieversorgungsleitung (12) an eine Datensenke (15) und zur gleichzeitigen Energieversorgung eines an die Energieversorgungsleitung (12) angeschlossenen Verbrauchers (3), umfassend
eine Kommunikationsschnittstelle (4), die zum Empfangen eines ersten Kommunikationssignals von dem Endgerät (10) ausgebildet ist,
einen ersten Wandler (5), der zum Empfangen des ersten Kommunikationssignals mit der Kommunikationsschnittstelle (4) verbunden ist und der zum Erzeugen eines Steuersignals aus dem ersten Kommunikationssignal ausgebildet ist,
einen Energieversorgungseingang (6) zum Eingeben einer Eingangsspannung (Uᵢₙ) aus einer mit dem Energieversorgungseingang (6) verbundenen Energieversorgung (11),
einen Energieversorgungsausgang (7) zum Ausgeben einer Ausgangsspannung (U₃) an die Energieversorgungsleitung (12),
Mittel zum Erzeugen einer Gleichspannung (8) aus der Eingangsspannung (Uᵢₙ) und
eine Ausgangsstufe (9), deren Steuereingang zum Empfangen des Steuersignals (U₂) mit dem ersten Wandler (5) verbunden ist und die aus der Gleichspannung (U₁) basierend auf dem Steuersignal (U₂) die Ausgangsspannung (U₃) erzeugt und an den Energieversorgungsausgang (7) ausgibt,
**dadurch gekennzeichnet, dass** die Ausgangsstufe (9) einen ersten Pegel oder einen zweiten Pegel als Ausgangsspannung (U₃) ausgibt und dass die Ausgangsstufe (9) die Ausgangsspannung (U₃) derart zwischen dem ersten Pegel und dem zweiten Pegel ändert, dass in dem zeitlichen Verlauf der Ausgangsspannung (U₃) die in dem Kommunikationssignal enthaltenen Daten kodiert sind und dass die im Mittel anliegende Ausgangsspannung (U₃) einen vordefinierten Schwellwert nicht unterschreitet, so dass auch bei einer Übertragung von Daten eine Energieversorgung des Verbrauchers (3) über die Ausgangsspannung (U₃) möglich bleibt.

2. Schnittstelleneinheit nach Anspruch 1, **dadurch gekennzeichnet, dass** die Ausgangsstufe (9) einen oder mehrere Schalter umfasst, der/die basierend auf dem Steuersignal zwischen einem ersten Schalterzustand und einem zweiten Schalterzustand wechselt/wechseln, wobei die Ausgangsstufe (9) bei dem ersten Schalterzustand den ersten Pegel und bei dem zweiten Schalterzustand den zweiten Pegel ausgibt.

3. Schnittstelleneinheit nach Anspruch 2, **dadurch gekennzeichnet, dass** der/ die Schalter durch einen elektronischen Schalter, vorzugsweise einen Transistor, gebildet ist.

4. Schnittstelleneinheit nach einem der Ansprüche 1 bis 3, **dadurch gekennzeichnet, dass** die Ausgangsstufe (9) einen oder mehrere steuerbare Widerstände aufweist, der/die basierend auf dem Steuersignal zwischen einem ersten Zustand und einem zweiten Zustand wechselt/wechseln, wobei die Ausgangsstufe bei dem ersten Zustand den ersten Pegel und bei dem zweiten Zustand den zweiten Pegel ausgibt

5. Schnittstelleneinheit nach einem der Ansprüche 1 bis 4, **dadurch gekennzeichnet, dass** die Ausgangsstufe (9) derart ausgebildet ist, dass der erste Pegel gleich der Gleichspannung (U₁) ist und dass der zweite Pegel gleich einer detektierbar niedrigeren Spannung als die Gleichspannung ist.

6. Schnittstelleneinheit nach einem der Ansprüche 1 bis 5, **dadurch gekennzeichnet, dass** der erste Wandler (5) als Teilnehmer eines Busses ausgebildet ist, so dass das Endgerät (10) das Kommunikationssignal über den Bus an den ersten Wandler (5) senden kann.

7. Schnittstelleneinheit nach einem der Ansprüche 1 bis 6, **dadurch gekennzeichnet, dass** der erste Wandler (5) dazu ausgebildet ist, aus dem Kommunikationssignal ein Rechtecksignal als Steuersignal (U₂) zu erzeugen.

8. Schnittstelleneinheit nach einem der Ansprüche 1 bis 7, **dadurch gekennzeichnet, dass** das durch den ersten Wandler (5) ausgegebene Steuersignal (U₂) einem Kommunikationsstandard genügt.

9. Schnittstelleneinheit nach einem der Ansprüche 1 bis 8, **dadurch gekennzeichnet, dass** die Ausgangsspannung (U₃) einen rechteckförmigen Verlauf hat.

10. Schnittstelleneinheit nach einem der Ansprüche 1 bis 9, **dadurch gekennzeichnet, dass** die Mittel zum Erzeugen einer Gleichspannung (8) einen Gleichrichter und einen Glättungskondensator umfassen.

11. System zum Übertragen von Daten von einem Endgerät (10) über eine Energieversorgungsleitung (12) an eine Datensenke (15), umfassend
eine Schnittstelleneinheit (2) nach einem der Ansprüche 1 bis 10 und
einen zweiten Wandler (14),
wobei der zweite Wandler (14) auf der Seite der Datensenke (15) mit der Energieversorgungsleitung (12) verbunden ist, wobei der zweite Wandler (14) dazu ausgebildet ist, aus einem von der Schnittstelleneinheit (2) erzeugten und über die Energieversorgungsleitung (12) übertragenen Spannung mit wechselnder Amplitude ein zweites Kommunikationssignal (U₆) für die Datensenke (15) zu erzeugen.

12. System zum Übertragen von Daten von einem Endgerät (10) über eine Energieversorgungsleitung (12) an einen elektrischen Verbraucher (3) unter Verwendung eines Systems nach Anspruch 11, wobei die Datensenke (15) Bestandteil des elektrischen Verbrauchers (3) ist und die Energieversorgungsleitung (12) neben der Datenübertragung ergänzend zur Versorgung des elektrischen Verbrauchers (3) genutzt wird.

13. System nach Anspruch 12, **dadurch gekennzeichnet, dass** die Datensenke (15) durch eine Steuereinheit des Verbrauchers (3) gebildet ist und/oder dass der Verbraucher (3) durch einen Motor gebildet ist.

14. System nach Anspruch 12 oder 13, **dadurch gekennzeichnet, dass** der zweite Wandler (14) durch eine Eingangsspannungsüberwachung des Verbrauchers (3) gebildet ist.

15. Verfahren zur Übertragung von Daten von einem Endgerät (10) über eine Energieversorgungsleitung (12) an eine Datensenke (15) und zur gleichzeitigen Energieversorgung eines an die Energieversorgungsleitung (12) angeschlossenen Verbrauchers (3), unter Verwendung eines Systems nach einem der Ansprüche 11 bis 14, umfassend die Schritte:
Empfangen eines ersten Kommunikationssignals von dem Endgerät (10),
Wandeln des ersten Kommunikationssignals mittels eines ersten Wandlers (5) in ein Steuersignal (U₂),
Steuern einer Ausgangsstufe (9) durch das Steuersignal zum Erzeugen einer Ausgangsspannung (U₃), deren Amplitude basierend auf dem Steuersignal zwischen einem ersten Pegel und einem zweiten Pegel wechselt, wobei in dem zeitlichen Verlauf der Ausgangsspannung (U₃) die in dem Kommunikationssignal enthaltenen Daten kodiert sind und wobei die im Mittel anliegende Spannung einen vordefinierten Schwellwert nicht unterschreitet, so dass auch bei einer Übertragung von Daten eine Energieversorgung des Verbrauchers über die Ausgangsspannung möglich bleibt,
Ausgeben der Ausgangsspannung (U₃) an die Energieversorgungsleitung (12),
Übertragen der Ausgangsspannung (U₃) an die Datensenke (15), wobei die Ausgangsspannung (U₃) auf Seite der Datensenke (15) ergänzend zum Versorgen eines Verbrauchers (3) genutzt wird,
Wandeln der bei der Datensenke (15) empfangenen Spannung mittels eines zweiten Wandlers (14) in ein zweites Kommunikationssignal (U₆) und
Eingeben des zweiten Kommunikationssignals (U₆) in die Datensenke (15).

## Claims

1. Interface unit for transmitting data from a terminal (10) via an energy supply line (12) to a data sink (15) and for simultaneously supplying energy to a consumer (3) which is connected to the energy supply line (12), comprising a communication interface (4) which is constructed to receive a first communication signal from the terminal (10),
a first converter (5) which is connected to the communication interface (4) in order to receive the first communication signal and which is constructed to produce a control signal from the first communication signal,
an energy supply input (6) for inputting an input voltage (Uᵢₙ) from an energy supply (11) which is connected to the energy supply input (6),
an energy supply output (7) for outputting an output voltage (U₃) to the energy supply line (12),
means for producing a direct-current voltage (8) from the input voltage (Uᵢₙ) , and
an output stage (9) whose control input is connected to the first converter (5) in order to receive the control signal (U₂) and which produces the output voltage (U₃) from the direct-current voltage (U₁) based on the control signal (U₂) and outputs it to the energy supply output (7),
**characterised in that** the output stage (9) outputs a first level or a second level as an output voltage (U₃) and **in that** the output stage (9) changes the output voltage (U₃) between the first level and the second level in such a manner that, over the period of time of the output voltage (U₃), the data contained in the communication signal are encoded and the output voltage (U₃) applied at the means does not fall below a predefined threshold value so that even when data are transmitted it remains possible to supply energy to the consumer (3) via the output voltage (U₃).

2. Interface unit according to claim 1, **characterised in that** the output stage (9) comprises one or more switches which, based on the control signal, change(s) between a first switch state and a second switch state, wherein the output stage (9) in the first switch state outputs the first level and in the second switch state outputs the second level.

3. Interface unit according to claim 2, **characterised in that** the switch(es) is/are formed by an electronic switch, preferably a transistor.

4. Interface unit according to any one of claims 1 to 3, **characterised in that** the output stage (9) has one or more controllable resistor(s) which, based on the control signal, change(s) between a first state and a second state, wherein the output stage in the first state outputs the first level and in the second state outputs the second level.

5. Interface unit according to any one of claims 1 to 4, **characterised in that** the output stage (9) is constructed in such a manner that the first level is equal to the direct-current voltage (U₁) and **in that** the second level is equal to a detectably lower voltage than the direct-current voltage.

6. Interface unit according to any one of claims 1 to 5, **characterised in that** the first converter (5) is constructed as a participant of a bus so that the terminal (10) can transmit the communication signal via the bus to the first converter (5).

7. Interface unit according to any one of claims 1 to 6, **characterised in that** the first converter (5) is constructed to produce from the communication signal a square wave signal as a control signal (U₂).

8. Interface unit according to any one of claims 1 to 7, **characterised in that** the control signal (U₂) output by the first converter (5) complies with a communication standard.

9. Interface unit according to any one of claims 1 to 8, **characterised in that** the output voltage (U₃) has a rectangular path.

10. Interface unit according to any one of claims 1 to 9, **characterised in that** the means for producing a direct-current voltage (8) comprise a rectifier and a smoothing capacitor.

11. System for transmitting data from a terminal (10) via an energy supply line (12) to a data sink (15), comprising an interface unit (2) according to any one of claims 1 to 10 and a second converter (14),
wherein the second converter (14) is connected at the side of the data sink (15) to the energy supply line (12), wherein the second converter (14) is configured to produce a second communication signal (U₆) for the data sink (15) from a voltage which is produced by the interface unit (2) and which is transmitted via the energy supply line (12) with a changing amplitude.

12. System for transmitting data from a terminal (10) via an energy supply line (12) to an electrical consumer (3) using a system according to claim 11, wherein the data sink (15) is a component of the electrical consumer (3) and the energy supply line (12) is further used in addition to the data transmission to supply the electrical consumer (3).

13. System according to claim 12, **characterised in that** the data sink (15) is formed by a control unit of the consumer (3) and/or **in that** the consumer (3) is formed by a motor.

14. System according to claim 12 or claim 13, **characterised in that** the second converter (14) is formed by an input voltage monitoring unit of the consumer (3).

15. Method for transmitting data from a terminal (10) via an energy supply line (12) to a data sink (15) and for simultaneously supplying energy to a consumer (3) which is connected to the energy supply line (12), using a system according to any one of claims 11 to 14, comprising the steps of:
receiving a first communication signal from the terminal (10), converting the first communication signal by means of a first converter (5) into a control signal (U₂),
controlling an output stage (9) by means of the control signal in order to produce an output voltage (U₃) whose amplitude based on the control signal changes between a first level and a second level, wherein, over the period of time of the output voltage (U₃), the data contained in the communication signal are encoded and wherein the voltage applied at the means does not fall below a predefined threshold value so that even in the event of transmission of data it remains possible to supply energy to the consumer via the output voltage,
outputting the output voltage (U₃) to the energy supply line (12),
transmitting the output voltage (U₃) to the data sink (15), wherein the output voltage (U₃) is at the side of the data sink (15) used in addition to supply a consumer (3),
converting the voltage received at the data sink (15) by means of a second converter (14) into a second communication signal (U₆), and
inputting the second communication signal (U₆) into the data sink (15).

## Revendications

1. Unité d'interface pour la transmission de données d'un terminal (10) par l'intermédiaire d'une ligne d'alimentation en énergie (12) à un collecteur de données (15) et pour l'alimentation en énergie simultanée d'un consommateur (3) connecté à la ligne d'alimentation en énergie (12), comprenant
une interface de communication (4) qui est conçue pour la réception d'un premier signal de communication provenant du terminal (10),
un premier convertisseur (5) qui est relié, pour la réception du premier signal de communication, avec l'interface de communication (4) et qui est conçu pour générer un signal de commande à partir du premier signal de communication,
une entrée d'alimentation en énergie (6) pour l'entrée d'une tension d'entrée (Uᵢₙ) à partir d'une alimentation en énergie (11) reliée à l'entrée d'alimentation en énergie (6),
une sortie d'alimentation en énergie (7) pour la sortie d'une tension de sortie (U₃) vers la ligne d'alimentation en énergie (12),
des moyens pour générer une tension continue (8) à partir de la tension d'entrée (Uᵢₙ) et
un étage de sortie (9), dont l'entrée de commande est reliée, pour la réception du signal de commande (U₂), avec le premier convertisseur (5) et qui génère, à partir de la tension continue (U₁), sur la base du signal de commande (U₂), la tension de sortie (U₃) et l'envoie vers la sortie d'alimentation en énergie (7),
**caractérisée en ce que** l'étage de sortie (9) génère un premier niveau et un deuxième niveau en tant que tension de sortie (U₃) et **en ce que** l'étage de sortie (9) fait varier la tension de sortie (U₃) entre le premier niveau et le deuxième niveau de façon à ce que, dans le tracé temporel de la tension de sortie (U₃), les données contenues dans le signal de communication soient codées et à ce que la tension de sortie (U₃) appliquée dans le moyen ne dépasse par une valeur seuil prédéfinie, de façon à ce que même lors d'une transmission de données, une alimentation en énergie du consommateur (3) par la tension de sortie (U₃) reste possible.

2. Unité d'interface selon la revendication 1, **caractérisée en ce que** l'étage de sortie (9) comprend un ou plusieurs commutateurs qui varie(nt), sur la base du signal de commande, entre un premier état de commutateur et un deuxième état de commutateur, l'étage de sortie (9) générant le premier niveau dans le premier état de commutateur et générant le deuxième niveau dans le deuxième état de commutateur.

3. Unité d'interface selon la revendication 2, **caractérisée en ce que** le/les commutateur(s) est/sont constitué(s) chacun d'un commutateur électronique, de préférence un transistor.

4. Unité d'interface selon l'une des revendications 1 à 3, **caractérisée en ce que** l'étage de sortie (9) comprend une ou plusieurs résistances contrôlables qui varie(nt), sur la base du signal de commande, entre un premier état et un deuxième état, l'étage de sortie générant le premier niveau dans le premier état et générant le deuxième niveau dans le deuxième état.

5. Unité d'interface selon l'une des revendications 1 à 4, **caractérisée en ce que** l'étage de sortie (9) est conçu de façon à ce que le premier niveau est égal à la tension continue (U₁) et **en ce que** le deuxième niveau est égal à une tension inférieure, de manière détectable, à la tension continue.

6. Unité d'interface selon l'une des revendications 1 à 5, **caractérisée en ce que** le premier convertisseur (5) est conçu comme un participant à un bus, de façon à ce que le terminal (10) puisse envoyer le signal de communication par l'intermédiaire du buse au premier convertisseur (5).

7. Unité d'interface selon l'une des revendications 1 à 6, **caractérisée en ce que** le premier convertisseur (5) est conçu pour générer, à partir du signal de communication, un signal rectangulaire en tant que signal de commande (U₂).

8. Unité d'interface selon l'une des revendications 1 à 7, **caractérisée en ce que** le signal de commande (U₂) généré par le premier convertisseur (5) respecte un standard de communication.

9. Unité d'interface selon l'une des revendications 1 à 8, **caractérisée en ce que** la tension de sortie (U₃) présente un tracé rectangulaire.

10. Unité d'interface selon l'une des revendications 1 à 9, **caractérisée en ce que** les moyens permettant de générer une tension continue (8) comprennent un redresseur et un condensateur de lissage.

11. Système de transmission de données d'un terminal (10) par l'intermédiaire d'une ligne d'alimentation en énergie (12) à un collecteur de données (15), comprenant
une unité d'interface (2) selon l'une des revendications 1 à 10 et
un deuxième convertisseur (14),
le deuxième convertisseur (14) étant relié, sur le côté du collecteur de données (15), avec la ligne d'alimentation en énergie (12), le deuxième convertisseur (14) étant conçu pour générer, à partir d'une tension à amplitude variable générée par l'unité d'interface (2) et transmise par l'intermédiaire de la ligne d'alimentation en énergie (12), un deuxième signal de communication (U₆) pour le collecteur de données (15).

12. Système de transmission de données d'un terminal (10) par l'intermédiaire d'une ligne d'alimentation en énergie (12) à un consommateur électrique (3) à l'aide d'un système selon la revendication 11, le collecteur de données (15) faisant partie du consommateur de données (3) et la ligne d'alimentation en énergie (12) étant utilisée, en complément de la transmission de données, pour l'alimentation du consommateur électrique (3).

13. Système selon la revendication 12, **caractérisé en ce que** le collecteur de données (15) est constitué d'une unité de commande du consommateur (3) et/ou **en ce que** le consommateur (3) est constitué d'un moteur.

14. Système selon la revendication 12 ou 13, **caractérisé en ce que** le deuxième convertisseur (14) est constitué d'une surveillance de tension d'entrée du consommateur (3).

15. Procédé pour la transmission de données d'un terminal (10) par l'intermédiaire d'une ligne d'alimentation en énergie (12) à un collecteur de données (15) et pour l'alimentation en énergie simultanée d'un consommateur (3) connecté à la ligne d'alimentation en énergie (12), à l'aide d'un système selon l'une des revendications 11 à 14, comprenant les étapes suivantes :
réception d'un premier signal de communication en provenance du terminal (10),
conversion du premier signal de communication au moyen d'un premier convertisseur (5) en un signal de commande (U₂),
contrôle d'un étage de sortie (9) par le signal de commande pour la génération d'une tension de sortie (U₃) dont l'amplitude varie, sur la base du signal de commande entre un premier niveau et un deuxième niveau, moyennant quoi, dans le tracé temporel de la tension de sortie (U₃), les données contenues dans le signal de communication sont codées et la tension appliquées dans le moyen ne dépasse pas une valeur seuil prédéfinie, de façon à ce que, même lors d'une transmission de données, une alimentation en énergie du consommateur par l'intermédiaire de la tension de sortie reste possible,
envoi de la tension de sortie (U₃)) la ligne d'alimentation en énergie (12),
transmission de la tension de sortie (U₃) au collecteur de données (15), la tension de sortie (U₃) étant utilisé, du côté du collecteur de données (15), de manière complémentaire, pour l'alimentation d'un consommateur (3),
conversion de la tension reçue au niveau du collecteur de données (15) au moyen d'un deuxième convertisseur (14) en un deuxième signal de communication (U₆) et
entrée du deuxième signal de communication (U₆) dans le collecteur de données (15).
